# EUROPEAN PATENT APPLICATION

(11) **EP 3 424 638 A1**
(43) Date of publication of application: **09.01.2019**
(21) Application number: 18181252.0
(22) Date of filing: 02.07.2018
(51) Int. Cl.: B23Q 1/66, B23Q 39/02, B23Q 1/58

(54) **FLEXIBLE MULTI-TABLE DEVICE**

(30) Priority: 04.07.2017 JP 2017130895
(71) Applicant: Sugiyama, Akira, Rancho Palos Verdes, CA 90275 (US)
(72) Inventor: Sugiyama, Akira, Rancho Palos Verdes, CA 90275 (US)
(74) Representative: Patentanwälte Ruff, Wilhelm, Beier, Dauster & Partner mbB

(57) **Abstract**

In the machine tool 2, two or more machine tables 5 are movably provided on the linear way 4 of the machine base 2, the pinion gear 14 is engaged with the rack 13 of the machine base 3, and the feeding movement of each table 5, the pinion gear 14 is driven by a feed motor 15 mounted on each table 5, and the feed motor 15 is controlled by the table control unit 21 so that the table 5 is fed and moved. In the table independent mode, the movement of the table 5 is independently controlled, and in the table linkage mode, the feeding movements of two or more tables 5 are controlled in the same direction at the same speed and in the synchronous state as the same movement amount.

## Description

### Field of the Invention

The present invention relates to a table apparatus capable of flexibly recombining two or more machine tables (5) with respect to a machine base (3) in accordance with machining contents of a workpiece in a machine tool, for example, a portal type machining center.

### Background of the Invention

Generally, in a machine tool, feeding mechanism of machine tables are driven by lead screw unit or a ball type lead screw unit provided for each table. In many machine tools are provided with automatic pallet change system which able to change work pieces during machining if the productivity need to be improved.

For example, Japanese Patent Application Laid-Open No. 05-293731 discloses a method in which, in a portal-type machining center, two tables are fed in a linear way in the X-axis direction of a machine base so that they are movable so that the work on each table can be independently fed and moved, or two tables are mechanically connected by a collet type connecting mechanism and a long common work is fixed on a table in a connected state and a table in a connected state is simultaneously fed and moved.

In addition, Japanese Patent Application Laid-Open No. 2009-220217 discloses a machine tool in which three tables are fed to three portal-type machining centers (processing units) to be movable while utilizing a plurality of pallet exchanging apparatuses, the table is mechanically connected by a collet type attachment/detachment device, and a common work is fed and moved. This kind of pallet exchanging device is attached to a machine table of machine tool to efficiently supply and take out a workpiece and is effective from the viewpoint of processing efficiency, but on the other hand, in order to occupy a large installation space, increase the size of attached equipment of the machine, resulting in a drastic increase in equipment cost, and complicated control of loading and unloading of a plurality of pallets.

In each of the techniques of Patent Document 1 and Patent Document 2, a lead screw unit or a ball type lead screw unit is adopted for each table as a table feeding and moving device. These lead screw units are assembled with the lead nut mounted under the machine table and combining the feed motor.

In the techniques of Patent Document 1 and Patent Document 2, when a lead screw unit, a table are failed, they are detached from the machine tool. However, their removal and assembly work usually involve a table, a lead screw, and a feed motor remove it from the machine base, screw the lead nut to the new feed screw, install the feed motor, and connect the feed motor to the lead screw.

Such detaching/assembling work is necessarily forced to be troublesome and complicated disassembling and assembling of the feed and transfer device, so it is forced to do only when the lead screw unit, the table or the like breaks down, and the work which is not an easy and aggressive work to be done according to the change in the processing content of the work. Therefore, after the portal type machine tools and portal type machining centers are manufactured, or after installation in those factories, depending on the processing contents of the workpieces, adding or removing tables to or from the machine base, most of the work such as replacement has not been done.

Further, in the techniques of Patent Document 1 and Patent Document 2, since the lead screw unit and the feed motor for driving the lead screw are required for each table, when the number of tables increases, the lead screw unit and a feed motor for driving the lead screw are attached to the machine base side at the manufacturing stage and are arranged in parallel state between the machine base linear way. For this reason, the number of tables installed is restricted by the space between the linear ways, and the installation positions of the plurality of multi numbers of lead screw units are biased sideways from the center position of the table, It becomes an obstacle to a smooth feeding operation.

On the other hand, Patent Document 3 discloses a rack and pinion gear type apparatus as a table feeding apparatus in a conveying apparatus such as a machine tool. According to the table feed device of the rack/pinion gear type, the table has a drive motor for feeding and a pinion gear, and the pinion gear is engaged with the rack on the bed side to constitute the table as a self-propelled type. Since the table feeding means of the rack-and-pinion type system does not have to pierce the feed nut as a thread pair with the feed screw, it is easier to add a table to the machine base compared to the feed screw unit, it can be set that it can be removed.

### Prior Art Documents

Patent Document 1 Japanese Patent Application Laid-Open No. 05-293731
Patent Document 2 Japanese Patent Application Laid-Open No. 2009-220217
Patent Document 3 Japanese Patent Application Laid-Open No. 01-55936

### Summary of the Invention

An object of the present invention is to flexibly recombine a plurality of tables with respect to a machine base in machine tools, principally portal-type machining centers according to the processing contents of a workpiece.

### Means for Solving the Problem

Based on the above-mentioned subjects, the present invention focuses on the rack and pinion gear system, adopts a rack and pinion gear system as a means for feeding a table of a machine tool, and can move multi numbers of tables relative to a machine base of a machine tool, so that it is possible to freely reconfigure, multi numbers of tables according to the processing contents of the workpiece. Incidentally, Patent Document 3 mentioned above employs a rack/pinion gear system as a means for feeding the table, but according to the processing contents of the work, a technical solution of combining multi numbers of tables against a machine base it does not describe means, nor does it suggest such an idea.

According to the present invention, a machine table (5) is movably supported between a workpiece machining position and a workpiece change over position by a longitudinal linear way (4) of a machine base (3) one or more machining heads (6) capable of moving in multiple axial directions are provided, and the work-piece (7) is fixed to the machine table (5) at the workpiece change over position, and is fixed to the machine table (5) at the work processing position (7) is machined by the machining head (6), and the machined work (7) is removed at the work change over position.

The flexible multi-table system (1) of the present invention is characterized in that two or more machine tables (5) are movably installed on the linear ways (4) in the above machine tool (2), a pinion gear (14) attached to each machine table (5) is engaged with a rack (13) fixed in the longitudinal direction of the table (3), and the pinion gear (14) is moved, the machine table (5) is fed and moved by being driven by a feed motor (15) mounted on each table (5) and controlling the feed motor (15) by the table control unit (21).

The flexible multi-table device (1) of the present invention controls the movement of each machine table (5) independently by the table control unit (21) in the table independent mode and is fixed to each machine table (5), a step of processing the work (7) by the machining head (6) at the work change over position, a step of set up the unprocessed(blank) workpiece (7) to each machine table (5) at the work change over position, and a step of removing the machined workpiece (7) having the blank workpiece (7) at the workpiece change over position in parallel, and in the table linkage mode, a large workpiece common to the two or more machine tables (5)) is fixed at the workpiece change over position, the feed movement of the two or more machine tables (5) is controlled in the synchronous state as the same movement amount in the same direction by the table control unit (21), after machining a common large workpiece (7) fixed to the machine table (5) by the machining head (6) at the work change over position, a large machined work piece fixed to the two or more tables (5) and the work piece (7) is removed at the work change over position.

Here, the "table linkage mode" does not mechanically connect multi numbers of tables, but brings multi numbers of tables close at regular intervals, fixes the interval of the machine table (5) in the field of the control program while controlling the multi numbers tables (5) in the same direction at the same speed and the same movement amount in the synchronous state.

In the flexible multi-table device (1), two or more machine tables (5) are detachably installed on the linear way (4), and a machine table (5) is added to and removed from the linear way (4), the multinumber of tables (5) are rearranged as a predetermined combination.

According to the present invention, in the flexible multi-table device (1), in the table linkage mode, a sub table (16) common to two or more machine tables (5) is bridged so that movement of two or more machine tables (5) and the sub-table (16) in the process of controlling in synchronism with the same movement amount in the same direction by the table control unit (21) in synchronism, either of friction, fitting and engagement or to restrain it. Further, the present invention is characterized in that, brackets (17) are attached to the opposite side in the movement direction of each machine table (5), the sub-table (16) is supported by the brackets (17), and a space is formed near the opposite side.

The present invention relates to a flexible multi-table device (1), in which a tooth of a rack (13) is attached to a machine base (3) with its teeth not facing upwards and oriented horizontally, and a pinion gear (14) or in a horizontal direction.

The present invention relates to a flexible multi-table device (1) in which an automatic head changing device is attached to a ram (11) so that a spindle head or a spindle (12) suitable for cutting conditions of a work piece (7) can be selected, respectively.

The present invention relates to a flexible multi-table device (1) in which the processing contents of two or more machining heads (6) are made different and the feeding movement of two or more machine tables (5) from one side of the machine base in the process, different processing is sequentially executed for each processing head (6).

Furthermore, the present invention provides a flexible multi-table device (1) in which a linear way cover (18) is provided on the upper surface of a linear ways (4) of a machine base (3), prevents intrusion of cutting fluid and surrounds the entire machine tool (2) with a machine cover (19) to prevent chips and cooling / cutting fluid from scattering during machining.

### Effect of the Invention

According to the flexible multi-table device (1) of the present invention, even if the machine table (5) is easily reassembled by engagement between the rack (13) of the base (3) and the pinion gear (14) of each table since the feeding movement of the table (5) can be easily set, and the feed motor (15) is attached to each table (5), each table (5) can move freely, the table control unit (21) can independently control the movement of each table (5) in the table independent mode, so that it is possible to cope with various processing modes, in particular, even without a pallet device, during processing of the work (7) of one table (5), loading (mounting) and carrying out (removal) of the work (7) to and from the other table, it is possible to mount a large workpiece (7) which is common to two or more tables (5) in the table linkage mode, and in the table linkage mode, it is possible to set 2, since the above table (5) is controlled in the synchronous state as the same movement amount in the same speed and in the same direction while fixing the interval of the table (5) by the table control unit (21), two or more tables (5), It is unnecessary to provide a mechanically complicated coupling structure, and the structure is simple, and it is possible to manufacture at low cost and also less maintenance.

In the flexible multi-table device (1) of the present invention, two or more tables (5) are detachably installed on the linear ways(4), and addition and removal of the table (5) from and into the linear way since it can be done freely, multi numbers of tables (5) can be flexibly recombined and table (5) of various sizes can be selected also in the processing stage of the work (7), and the feed motor (15) with required performance can be appropriately selected according to the processing contents, and as a result, it is easy to change or combine the number of tables (5) installed according to the processing step of the work (7). Further, since the pinion gears (14) of the multi numbers of tables (5) engage with the common rack (13), even when the table (5) is increased or decreased, the table (5) pinion gear (14) and the linear way (4) of the rack (13) without the need for changing the feeding means such that when the recombinant table (5), complicated operations can be omitted

In the table linkage mode, a sub table (16) common to two or more machine tables (5) is bridged so that two or more machine tables (5) and the sub table (16) are frictional, if it is constrained by any of the fastening, the interlocking feed of two or more tables (5) is secure. In addition, if the bracket (17) is attached to the opposite side of each machine table (5), the weight of the machine table (5) is reduced, the support of the sub table (16) is stabilized, can effectively be used as a mounting/storage space for the linear way cover (18).

When the pinion gear (14) engages with the rack (13) from the vertical direction or the horizontal direction with the tooth facing upward or the horizontal direction, the rack (13) and the pinion gear (14) can be easily engaged.

If the automatic head changing device equipped with the ram (11) selects a spindle head that conforms to the cutting condition of the work (7), the spindle head or spindle (12) appropriate for the work (7), various kinds of machining can be performed with an appropriate cutting speed and cutting feed. By selecting the spindle head or spindle (12) that meets the cutting conditions of the workpiece (7) by the automatic head changing device, high speed spindle heads (spindles) for high speed machining such as aluminum and high powered spindle heads, it is possible to properly deal with various kinds of workpiece machining by selecting the low-speed and high-torque spindle head (spindle) necessary for machining such difficult-to-cut materials and selecting the feed motor with appropriate feed speed and thrust torque for each machining, which flexibility of suitable table feed motor selection is not available by automatic pallet changer even automatic head changing device is available, the automatic pallet changer is consisted with machine table and pallet which is clamped on top of the machine table by special clamping mechanism. Each pallet will be switched over from one machine table to/from pallet storage/rest area and a feed motor is attached to the end of X-axis ball screw connected with a machine table and feed nut. This invention is consisted with multiple machine tables, not multiple pallets with 1 machine table.

When two or more processing heads (6) are provided and the contents of processing are different, in the course of feeding and moving the multi numbers of tables (5) along the linear ways (4), each machining head (6), different machining can be executed sequentially and efficiently for each process.

Linear way cover (18) is provided on the upper surface of the linear ways (4) of the machine base (3), it is possible to prevent invasion of cutting chips and cooling/cutting fluid into the linear way (4). If the machine tool (2) is surrounded entirely by the machine cover (19), it is possible to prevent cutting chips and cooling/cutting fluid from scattering during machining accompanying high-speed machining.

### BRIEF DESCRIPTION OF THE DRAWINGS

FIG. 1 is a plan view of a flexible multiple table device of the present invention in a table independent mode.
FIG. 2 is a plan view of the flexible multi-table device of the present invention in a table linkage mode.
FIG. 3 is a side view of a table and a sub table in a table linkage mode in the flexible multiple table device of the present invention.
FIG. 4 is an enlarged front view of a portal type machine tool having a flexible multiple table device of the present invention.
FIG. 5 is an enlarged front view of a part of another example of the guide structure of a table in the flexible multiple table device of the present invention.
FIG. 6 is an enlarged plan view of a meshing state of a rack and pinion gear in the flexible multiple table device of the present invention.
FIG. 7 is an enlarged plan view of another meshing state of the rack and pinion gear in the flexible multiple table device of the present invention.
FIG. 8 is an enlarged cross-sectional view of a part of a positioning state and a linked state of a table and a sub table thereon in a table linkage mode in the flexible multiple table of device of the present invention.
FIG. 9 is a block diagram of a controller in the flexible multiple table device of the present invention.
FIG. 10 is a schematic side view of a linear way cover in the flexible multiple table device of the present invention.
FIG. 11 is a schematic side view of a machine cover in the flexible multiple table device of the present invention.
FIG. 12 is a plan view showing a state in which three tables are installed for one processing unit in the flexible multiple table device of the present invention.
FIG. 13 is a plan view showing a state in which four tables are installed for one processing unit in the flexible multiple table device of the present invention.
FIG. 14 is a plan view of a state in which four tables are installed for two processing units in the flexible multiple table device of the present invention.

### DETAILED DESCRIPTION OF THE PREFERRED EMBODIMENTS

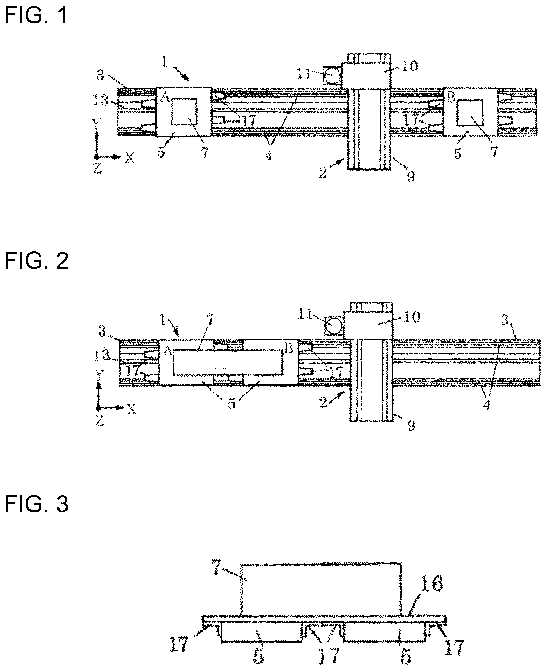

FIGS. 1 to 9 show a basic configuration example of the flexible multiple table device 1 of the present invention. The flexible multi-table device 1 is based on the existence of the machine tool 2. The machine tool 2 is, for example, a portal-type machining center, and in order to hold the workpiece, that is, the workpiece 7 so as to be movable in the feed direction, two machine parallel linear in the longitudinal direction of the machine base 3, usually the X- by means of the way 4, in the illustrated example, two tables 5 of the same size are movably supported between the workpiece machining position below the machining head 6 and the workpiece change over position at the end of the machine base 3 there.

Further, the machine tool 2 has one processing head 6 in the Z axis direction in the illustrated example at the work processing position with respect to the machine base 3 and is fixed to the table 5 by this machining head 6, and the desired workpiece 7 is processed. The unmachined workpiece 7 is supplied to each table 5 at the workpiece change over position and undergoes desired processing by the machining head 6 at the workpiece processing position. After completion of the machining, the machined workpiece 7 moves to the workpiece change over position together with the respective table 5 and is removed from the table 5 at that position. The machining head 6 is also referred to as a spindle head and is equipped with a tool mounting spindle 12.

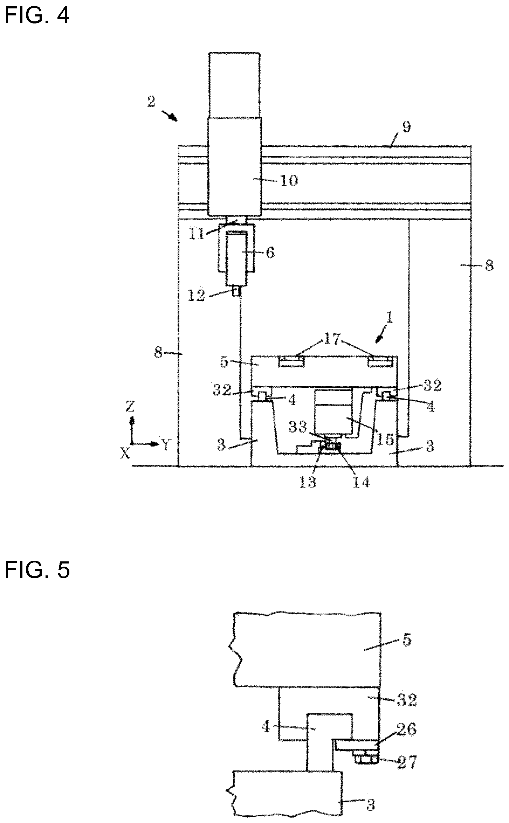

As shown in FIG. 4, the machining head 6 includes a column 8 on both sides, a cross beam 9 in the Y axis direction between the two columns 8, a saddle 10 and a saddle 10 movable in the Y axis direction with respect to the cross beam 9 And is attached to the lower end of the ram 11 movable in the Z-axis direction. For example, the spindle 12 is held in a multi-axis state, for example, in a state capable of controlling five axes. Although not shown, a tool suitable for machining is detachably attached to the spindle 12 by a tool changing operation of an automatic tool changer outside the machine.

In addition, the ram (11) has an automatic head changing device as necessary. The automatic head replacing apparatus is a spindle head adapted to the cutting conditions of the workpiece 7, for example, a high-speed spindle head for high-speed machining such as aluminum, a spindle of low speed and high torque required for machining a difficult-to-cut material such as titanium By selecting the head, appropriate cutting conditions are set for each processing. In response to the selection of various spindle heads, the controller 20 selects an appropriate feeding speed for cutting at the time of processing and sets the feeding speed in the feeding motor 15. In this way, it is possible to deal appropriately with processing of various kinds of workpieces 7.

1, 2 and 4, the flexible multi-table device 1 is provided with two tables 5 of A and B for the linear ways 4 to be movable in the longitudinal direction of the machine base 3, that is, in the X-axis direction. These tables 5 are detachable with respect to the linear way 4 and can be added to and removed from the linear ways 4 according to the processing contents of the workpiece 7.

The machine base 3 has a rack 13 fixed in the X axis direction, and each table 5 carries a feed motor 15, and rotates the pinion gear 14 by the motor shaft 33 of the feed motor 15. The pinion gear 14 engages with the rack 13, and when each table 5 is fed and moved, the feed motor 15 drives the pinion gear 14 to feed and move the table 5. In this manner, each table 5 is equipped with a feed motor 15 and is self-propelled.

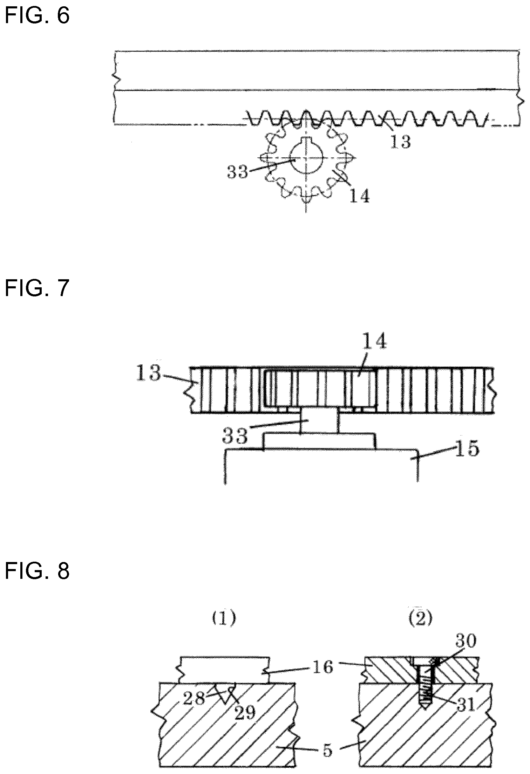

As shown in FIGS. 4 and 6, the rack 13 and the pinion gear 14, move the pinion gear 14 closer to the tooth groove direction (up and down direction) of the rack 13 with respect to the rack 13 in the lateral (horizontal) direction, Instead of this example, as shown in FIG. 7, with the rack 13 facing upward, by bringing the pinion gear 14 close to the teeth of the rack 13 in the vertical direction, they are engaged with each other can also do.

The feed motor 15 is controlled by the table control unit 21 of the control device 20 shown in FIG. The two table control units 21 correspond to the respective feed motors 15. In the table independent mode, the table control unit 21 independently controls each feed motor 15 based on the table independent mode program, and in the table interlock mode, the two feed motors 15 are controlled in synchronism based on the program in the table interlock mode.

The control in the table linkage mode is a mode in which multi numbers of tables 5 are brought close to each other at predetermined intervals and mechanically connected without fixing the intervals of the table 5 in the field of the control program, feed and move in the same direction as the same movement amount in synchronized state. Each feed motor 15 is usually a servomotor or a servomotor with a speed reducer and is equipped with an encoder and is configured to be numerically controllable.

In the example of FIG. 4, the linear ways 4 and the sliding guide 32 of the table 5 are open type guide structures with concave convex guide faces. Because of this open type guide structure, the table 5 has a structure that can be easily removed from the machine base 3 by pulling up from the linear ways 4. The open type guide structure is adopted to facilitate addition and removal of the table 5 by a simple attaching and detaching operation of the table 5 with respect to the linear way 4 according to the processing contents of the workpiece 7.

The attachment and detachment work and addition/removal of the table 5 are mainly performed by a skilled engineer at the manufacturing stage of the machine tool 2 to check the degree of parallelism of the machine table 5, the perpendicularity, the degree of interlocking of the rack 13 and the pinion gear 14, however, if it is possible to confirm and adjust the table 5, the work of attaching and detaching the machine table 5, addition and removal can be performed even after the manufacturing stage of the machine tool 2, for example, at the processing stage of the work 7, it can be done by an experienced technician. By attaching and detaching the machine table 5, it is possible to select and combine the feed motor 15 of an appropriate rotational speed and torque attached to the machine table 5 or the machine table 5 having a shape and dimension suitable for processing.

FIG. 5 shows a part of one side of another guide structure. The guide structure of FIG. 5 is a specific example in which the guide structure is constrained by adding the holding plate 26 and the mounting bolt 27 to the sliding guide structure with the concave and convex guide surface, and the floating of the table 5 is prevented. Attachment and removal of the machine table 5 with respect to the linear ways 4 are performed by loosening the attachment bolt 27, detaching the holding plate 26 from the lower surface of the sliding guide 32, and lifting the table 5 upward from the linear ways 4.

Note that the guide structure can also be constituted as a constrained structure such as a square shape, a wedge shape, or a groove shape. In the restraint type guide structure such as a square shape, a wedge shape, and a dovetail groove shape, attachment and detachment of the machine table 5 to and from the linear ways 4 are performed by pulling the machine table 5 in the guide direction of the linear ways 4 at the end portion of the linear ways 4, By inserting it into and out of it. This guiding structure is not limited to sliding guidance but rolling guidance by balls and rollers can also be used.

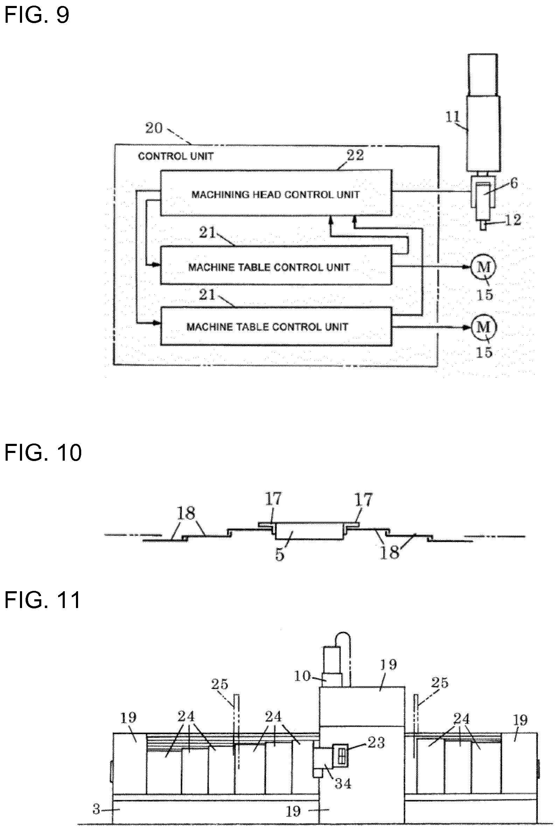

FIG. 9 shows a specific configuration of the control device 20. The control device 20 is configured as a computer numerical control system and has a table control unit 21 according to the number of tables 5 in order to control the feeding of the table 5 as described above, in addition, in order to control the processing motion of the machining head 6 and the feeding motion of the table 5 during processing, a numerical control unit 22 is provided. The table control unit 21 incorporates a table independent mode program so as to individually move the two tables 5 as independent movements in a single state and synchronizes the two tables 5 as the same movement amount in the same direction In order to move in the state, a table linkage mode program is built in. In addition, the machining head control unit 22 incorporates processing programs of various processing contents according to the processing type of the workpiece 7 and processing material. Therefore, it is easy to change the feed motion (feed movement) of the table 5 and various kinds of machining contents in the table independent mode and the table linkage mode, easily in the program field.

FIG. 1 shows the origin(home) positions of two tables 5 in the table independent mode. On the drawing, the table 5 of A is on the left side of the linear way 4 and the table 5 of B is on the right side of the linear way 4, their positions are the origin(home) positions of the respective tables 5, It is also a change position. Therefore, the unprocessed workpiece 7 is supplied to a predetermined position of the table 5 by a worker or a workpiece handling device (not shown) at each workpiece change over position, fixed by clamping means (not shown), mounted on the table 5.

At the time of machining in the table independent mode, the table control unit 21, first, moves only the table 5 of A to the workpiece machining position below the machining head 6, and gives an operation command to the machining head control unit 22 at that position. At this time, the machining head control unit 22 operates the machining head 6 according to the built-in machining program to perform a desired machining on the workpiece 7 and, during the machining, the table 5 together with the workpiece 7 and moves in the X-axis direction to perform machining feed of the workpiece 7.

After machining of the workpiece 7, in the table 5 of A, the machining head control unit 22 sends a machining completion command to the table control unit 21. The table control unit 21 moves the processed work 7 together with the table 5 of A to the left work change over position and waits for work change over, here, the worker or the workpiece handling apparatus not shown removes the workpiece 7 which has been processed from the table 5 of A at that position, supplies the unprocessed workpiece 7 to the table 5 of the left side A.

During the processing of the workpiece 7 of the table 5 on the left side A, a worker or a workpiece handling apparatus (not shown) supplies the unprocessed(blank) workpiece 7 to the table 5 on the right-side B and performs unprocessed workpiece 7 by clamping means the workpiece 7 is mounted on the table 5 of B. Therefore, after machining of the workpiece 7 of the table 5 on the left side is completed and the table 5 of A returns to the original(home) position, the workpiece 7 of the table 5 on the right-side B immediately moves to the lower position of the machining head 6, then, the state becomes ready for processing. During the movement of the table 5, as long as one table 5 does not return to its origin so that the two tables 5 move simultaneously and do not collide, the control device 20 moves the other table 5 so as not to operate Is prohibited. Therefore, the left and right tables 5 do not accidentally move and collide.

In this manner, in the table independent mode, the work required for the work 7 is successively and efficiently performed by alternately repeating the operation of machining one work 7 and the work of supplying or removing the other work 7. Normally, the work of supplying or removing the workpiece 7 is shorter than the processing time of the workpiece 7, so it ends during the processing of the workpiece 7. For this reason, the work time of supplying or removing the workpiece 7 or attaching / detaching the workpiece 7 does not interrupt the machining time of the workpiece 7 and substantially does not occupy the operating time of the machine tool 2. Therefore, the occupancy rate is increased correspondingly, and the productivity is greatly improved.

In such a process, the multi numbers of tables 5 perform the same function as the pallet. Therefore, the flexible multi-table device 1 of the present invention does not require a plurality of pallets, pallet changing devices, their large installation space, installation cost, etc., and by feeding and moving multiple tables 5, the same function as the one with the low cost can be obtained with a simple configuration. Of course, since there is no pallet changer, its complicated structure and control is unnecessary and there is no pallet exchange time.

Next, FIG. 2 shows the origin(home) positions of two tables 5 in the table linked mode, the table 5 of A is on the left side of the linear way 4 as in FIG. 1, the table 5 of B moves leftward along the linear way 4 and approaches the table 5 on the left side, then, at a fixed distance in this approaching state, or it is in a touched state with distance 0. In this approaching state, the two tables 5 are located at their respective original positions and hold one long work 7 straddling the two tables 5 at the origin position, that is, at the work change over position.

Here, the table control unit 21 moves the tables 5 of A and B to the workpiece machining position below the machining head 6 in the same direction at the same speed and in the synchronous state by the same amount of movement in accordance with the program in the table linkage mode. At that position, the machining head control unit 22 operates the machining head 6 to perform a desired processing on one long workpiece 7. After completion of the machining, the table control unit 21 moves the machined work 7 together with the tables 5 of A and B to the work change over position on the left side, that is, to the origin position. At this position, the processed workpiece 7 and the unprocessed/blank workpiece 7 are exchanged. It should be noted that the work replacement position can be set not only the left side but also on the right side. Since the phases of the two pinion gears 14 are normally different when the two tables 5 move, the backlash between the rack 13 and the pinion gear 14 can be prevented beforehand due to the difference in phase.

In this way, by moving the table 5 of A and B in the same direction by the same amount of movement in the same direction, even in the case where it is not mechanically connected, in the field of program of synchronous control of movement, the table 5 between A and B so that it can move in a state without relative approach or separation. Moreover, the weight of the large workpiece 7 is increased, and a large power is required for acceleration and deceleration at the time of moving or machining feed, but the two tables 5 each have a feed motor 15, even if the output of the feed motor 15 is not changed, the power shortage during feed movement is eliminated. The two feed motors 15 perform quick acceleration/deceleration, reduce the time loss at the time of movement, and greatly contribute to the improvement of machining efficiency. As described above, since a plurality of self-propelled/multiple tables 5 are always driven by the feed motor 15 corresponding to the number of interlocking motions in the table linkage mode, large tables 7 can be dealt with appropriately. This point is a great advantage of self-propelled/multiple table 5.

FIG. 3 shows a state in which, in the table linkage mode, a plate-like sub-table 16 is placed on the upper surface of the two tables 5 as needed and the frictional force between the upper surface of the table 5 and the lower surface of the sub-table 16 causes two and the table 5 is restrained. Each table 5 has a multi numbers of, for example, two brackets 17 at front and rear positions in the moving direction and supports the lower surface of the sub table 16 by these brackets 17. These brackets 17 securely support the work 7 by increasing the upper surface area of the table 5 while securing the mounting surface of the workpiece 7 and eliminating the deflection of the sub table 16 while suppressing the increase in the weight of the table 5 together with the table 5, a necessary space (storage space) is formed.

As illustrated in (1) of FIG. 8, the table 5 and the sub-table 16 are accurately positioned by fitting the positioning pins 28 of the sub table 16 and the positioning holes 29 of the table 5 as required as shown in FIG. 8 (2), the fixing bolt 30 from the sub-table 16 and the screw hole 31 of the table 5 can be tightened to combine them as a fastened state. Such a combination is effective from the viewpoint of ensuring synchronous control of the feed movement of the two tables 5 when a synchronization deviation of the feed movement is caused in one table 5 due to an unexpected disturbance during the table linkage mode. As described above, in the table linkage mode, the two tables 5 do not require a mechanical coupling structure such as a collet type, of course, without a connecting operation, they are linked synchronously in the field of the control program, then, the common work 7 is fed and moved.

Next, FIG. 10 shows an example in which a linear way cover 18 for preventing invasion of cutting chips or cutting fluid is provided on the upper surface of the machine base 3 of the machine tool 2. The linear way cover 18 is made of a plurality of roof-shaped plate materials and configured to be extensible and retractable by overlapping, and is provided between the end portion of the machine base 3 and the table 5 and between the tables 5, and the linear way cover 18 It stretches and contracts due to the change in the degree of overlapping and prevents cutting powder and cutting fluid from entering the linear way 4 beforehand. The bracket 17 of the table 5 supports the sub table 16 between the ends of the table 5 and the tables 5 and forms a space below. These spaces are also used as a space for accommodating the overlapping linear way cover 18 in the reduced state of the linear way cover 18.

Further, FIG. 11 shows an example in which the periphery of the machine tool 2 is covered with a machine cover 19 in order to prevent scattering of chips and cutting fluid. The machine cover 19 is provided in the upper space of the machine base 3 and covers the column 8, the cross beam 9, the saddle 10, the ram 11 and the machining head 6 in a state allowing movement of the machining head 6, and one side face In order to confirm the motion of the machining head 6 and to set data, it has a window 23 with a door, and for the purpose of loading and unloading the work 7 and adding and removing the work 5 on one or both side faces of the machine base 3 , A door 24 of a sliding door type, and further has a shutter 25 which can be raised and lowered at an intermediate position between the left and right. In order to insert and withdraw the long workpiece 7, the machine cover 19 is provided with a one-side opening door 34 near the center of the column 8 as necessary

The shutter 25 is located between the workpiece change over position and the workpiece machining position and is constantly descending and prevents scattering of cutting chips and cutting fluid from the workpiece machining position during machining, so that the workpiece changes over position, in order to prevent contamination of the workpiece 7 in standby state with cutting chips or cutting fluid. When the workpiece 7 moves from the workpiece change over position to the workpiece machining position or vice versa, when moving from the workpiece machining position to the workpiece change over position, the shutter 25 is lifted from the lowered position by an actuator (not shown) such as an air cylinder, allowing the passage of the table 5 and the workpiece 7 thereon so that they can be moved to the target position.

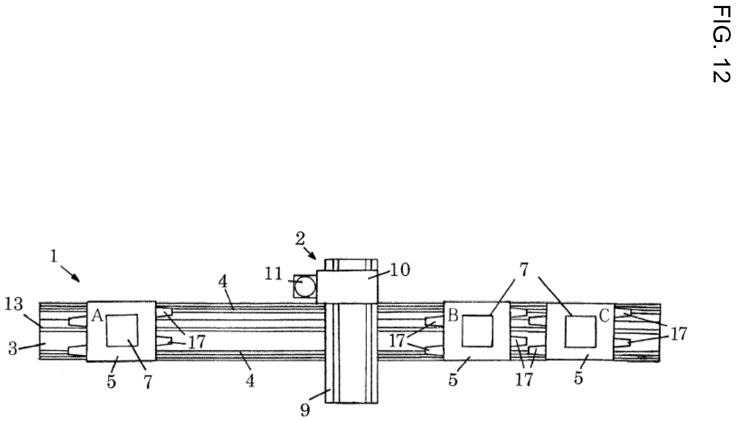

Next, FIG. 12 illustrates a state in which three tables 5 A, B, and C are provided on the machine base 3, and the respective tables 5 are located at the origin positions. The origin positions of these tables 5 are also work exchange positions, and the work 7 is fixed to the table 5 at each work change over position.

In FIG. 12, in the table independent mode, the table control unit 21 first moves the table 5 of A on the left in the drawing on the drawing to the right, processes the work 7 at the work processing position, and after processing, the table 5 is returned to the home position and then moved to the left of the intermediate B table 5 to process the work 7 of the table 5 of B at the work processing position and after moving the table 5 to the left finally, move the table 5 on the right side C to the left, work the workpiece 7 at the workpiece machining position, return the table 5 to the home position after the machining, and wait for the standby B to the right side of the table 5 of FIG.

Further, in FIG. 12, in the table linkage mode, the large work 7 is machined using two tables 5 or three tables 5. Therefore, the table control unit 21 sets the table 5 of B to the connection state with respect to the table 5 of A, or brings the tables 5 of B and C to the connected state with respect to the table 5 of A, the position of the origin is set as the origin position of machining, and these tables 5 are moved synchronously under the same direction, the same speed, and the same amount of movement, and the large work 7 is machined. Also at this time, the sub table 16 is placed on two or three tables 5 as necessary, and fixes the large work 7. It is assumed that only the tables 5 of B and C are connected and the tables 5 of B and C in the connected state are assumed as one table and the table 5 (one table) of B and C in the connected state and the table 5 It is also possible to perform processing and work exchange alternately with the table 5.

The work of attaching and detaching the table 5 to and from the machine base 3, that is, adding and removing the table 5, can be carried out by using a crane, a lift, or the like for the additional work of the table 5, to move the table 5 to be added to the linear way 4 to engage the rack 13 with the pinion gear 14 and if the work of removing the table 5 is to be performed, the table 5 to be removed is lifted from above the linear way 4 of the machine base 3, and the rack 13 and the pinion gear 14 to engage with each other. Therefore, the addition / removal of such a table 5 can be carried out easily in a short time compared with the feeding device of the feed screw unit type. When the pinion gear 14 engage with the tooth groove of the rack 13 in the direction of the tooth groove and engages with each other, if the tooth form of the rack 13 and the pinion gear 14 is tapered at the engagement start side, their engagement can be performed smoothly.

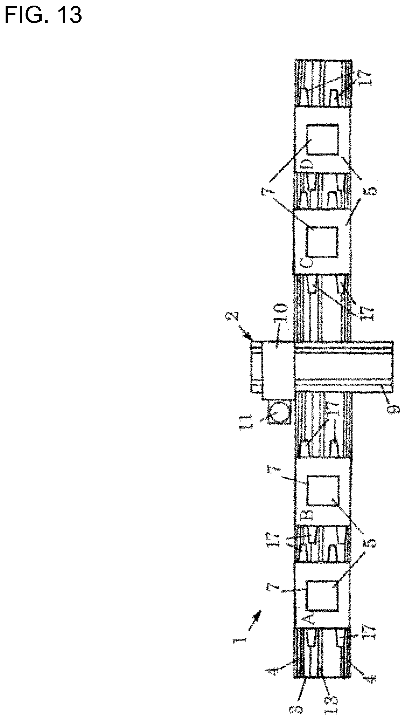

In FIG. 12, the number of the table 5 is three, but it may be more than three. FIG. 13 shows an example in which four tables 5 of A, B, C, and D are provided in the linear way 4 of the machine base 3. Even in the linkage mode of the four tables 5, the table independent mode and the table linkage mode can be set similarly to FIG. In this way, when addition of the number of tables 5 is predicted at the processing stage, the machine base 3 has a long dimension in the X axis direction in the manufacturing and assembling stage of the machine tool 2 in preparation for the addition to be produced.

In the case where the machine base 3 is manufactured as having a long dimension in the X-axis direction, in the table alone mode, the four tables 5 are sequentially arranged, for example, on the right-side end, and according to the four-step processing it moves from the right-side end to the processing position, and after processing at the processing position, it moves sequentially to the left-side end. Therefore, in the course of sequentially moving from the right-side end to the left-side end of the four workpieces 7, different processing is sequentially performed by the same processing or tool change at the processing position.

As described above, the increase in the number of the tables 5 can be made only by the existence of the machine base 3 which is sufficiently long in the X-axis direction, so that it is possible to perform without increasing the space like the pallet exchanging apparatus. Moreover, as the number of tables 5 increases and the workpiece 7 increases in size and its weight also increases, the number of feed motors 15 also increases due to an increase in the number of the tables 5, so that the feed speed and power of the work 7 are increased, regardless of increased weight, it will not decrease. (within the specified maximum loading weight limit per 1 table 5).

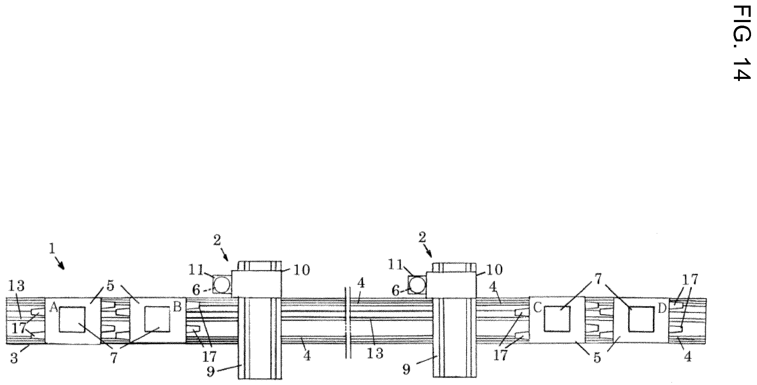

Further, FIG. 14 shows a state in which two machining heads 6 are provided on one machine base 3 and four tables 5 of A, B, C and D are arranged on the machine base 3. In the table independent mode, the workpieces 7 of the two tables 5 of A and B sequentially move from the left to the right, are processed by the corresponding left machining head 6, and the right C and D the workpiece 7 of the 2-sets of table 5 of the table sequentially moves from the right to the left and is processed by the corresponding right machining head 6. The processing contents of the two machining heads 6 may be the same or different.

FIG. 14, in the table linkage mode, as in FIG. 1, the workpiece 7 has two tables 5 of A and B in an linked state, and two tables 5 of C and D are in an linked state , If necessary, fixed by a sub table 16 of an appropriate length, and subjected to necessary processing separately or simultaneously by two machining heads 6. The table interlocking mode can also be set by putting three tables 5 or four tables 5 in an linked state.

Also in FIG. 14, if the machine base 3 is sufficiently long and four or more tables 5 can be arranged to the left of the machining head 6 on the left-side, for example, the work 7 on these tables 5 , And in the process of moving from the left end to the right end, the same processing or different processing can be sequentially performed by the two processing heads 6.

In the above specific example, the machining head 6 is provided with a spindle 12 which can be exchanged with respect to the ram 11 by means of an automatic head exchanging apparatus and which can be mounted with machining tools such as cutting, grinding, polishing, etc. However, it can also be configured as a type or as a spindle 12 of a type that cannot be replaced. These are supplied by an automatic head exchanging device or an automatic tool changer outside the machine under instructions from the processing head control unit 22 of the control device 20, attached to the ram 11 according to the processing contents, and removed. Although not shown, the spindle 12 can also be exchanged and selected by an automatic head changing device of the ram 11, as already described.

Supplementary Note 1 as described above, in the present invention, a multiple tables are added to a machine tool such as a large portal type machining center in the direction of the X axis and these tables are individually moved or simultaneously moved together, feed motors are attached to each table, and by individually controlling these feed motors, attachment and detachment of workpieces stacked on each table can be controlled by a machining time of a workpiece mounted on another table, let it be in a state that can be inside. Therefore, according to the present invention, it is possible to efficiently attach and detach workpieces to and from the table, thereby improving productivity.

As the feature of the present invention is that a feed motor is attached to each table, it is possible to cope with high-speed machining and correspond to high-output and high-torque machining without adding complicated structures, and furthermore, in the table linkage mode , it is also possible to solve the problem of backlash caused by the engagement between the rack and the pinion gear due to the phase difference at the two or more engaging positions of the rack and the pinion gear.

Furthermore, by linked multiple tables, it is possible to double the machining range (the length of the work), and by using the machine cover, while securing the safety work under high speed machining, it is possible to realize a flexible machine tool machine table mechanism can be constructed.

The ultimate new large machine tool seen from the user side is a machine tool that can greatly improve productivity, simplify maintenance, work and greatly expand the processing range without using a complicated structure on one machine, It is an object of the present invention to provide a flexible multiple table device capable of coping with a work process such as a material of a workpiece, roughness, finishing, etc., while also ensuring correspondence while minimizing cost increase at the time of purchase, can be provided. The present invention is meaningful in the sense that it can satisfy the above-mentioned problem.

Machine tools such as large portal type machining centers are very expensive and therefore greatly affect the acceleration and deceleration of the table positioning to the long distance and total machining time depending on how efficiently one machine can be used. For this purpose, a complex processing with compound angle, such as structural parts of a large aircraft, in particular, a biaxial processing head capable of tilting and rotation is attached, and a 5-axis processing machine is commonly used as a whole. The most of all workpieces to machine by 5-axis processing machine are large and heavy, in addition to the ability to process by 3-axis control with one work setup, capability to machine complexed and compound-angled 3-dimentional workpiece by the presence of a tiltable and rotatable biaxial machining head developed for the purpose to increase the productivity.

In addition, large machines with spindle changing devices are also in widespread use so as to accommodate various workpiece materials, and machining is performed by selecting a spindle milling head having a spindle motor that can handle the machining contents. When attaching a blank material of a large work to such a large 5-axis machine, and when shifting to secondary processing after completion of the primary processing, remove the work on which the primary machining has been completed from the table and add a new setting the workpiece with complicated machining to the correct posture and position on the machine table for secondary machining takes considerable attention and time, and it generally takes 25-30% or more of all machining steps, it is said that it will spend time of time, the real time the machine is processing is about 75-70%. For expensive machines in particular, it is recognized that when work change over time and installation time increase, productivity drops greatly, which is a bottleneck.

As a countermeasure against this, by adding an automatic pallet changing system, it becomes possible to remove a workpiece while the machine is being processed, and only the machining time of the work is set except for the replacement time of the pallet itself, thereby making it possible to improve productivity. However, the investment of machine tool 2 is high value, the work change over time and its jig and fixture set up time are increased, the productivity drops down, recognized as its neck.

The automatic large pallet changer requires a structure for inserting and removing a pallet table carrying a heavy weighted workpiece beside the pallet clamping system from the top of machine table at inside the machine, so its manufacturing cost also increases, so pallet changing time cannot be omitted. In addition, since the length of the work to be machined is also restricted to approximately the same size as the length of the pallet table, in order to process a work piece longer than the range, further introduction of a large machine is required, and further large investment It is necessary.

The automatic pallet changer is consisted with pallet and machine table as 2-piece construction. Pallet is set on the location pins which are set on top of the machine table, and pallet clamping devise will clamp and unclamp the pallet to the machine table which reduce the rigidity of this mechanical structure of the machine tool and increase the cost of manufacturing. Exchanging the pallet from one pallet to the other pallet from inside of the machine, both pallets should be moved out from the machine table to the outside of the machine tool which takes extra space as area of 2-pallets or more.

A mechanical structure has been devised in which a connection can be made between the locking rod and the collet in order to connect the two tables as disclosed in Japanese Patent Application Laid-Open No. 05-293731 mentioned above, in addition, as in Patent Document 2 (Japanese Patent Application Laid-open No. 2009-220217), in order to connect two tables, by using the same mechanical connecting structure and adding a pallet exchanging system, the purpose has achieved.

However, as mentioned above, these mechanical table coupling methods have complicated structures, with maintenance problems around, pallet type, the need for pallet exchange time and maintenance of its mechanical structure problems remain.

In the present invention, each table does not have a mechanical coupling system, a feed motor in the X axis direction is attached to each table, and a feed structure by engagement between the rack and the pinion gear is adopted, whereby one large 5 axis without adding an expensive automatic pallet changer at the portal-type machining center, while obtaining the same effect as that, the pallet exchange time is nullified and the work length is also controlled by linkage of multiple tables, one table (In the case of linkage of two tables) or work lengths of multiples according to the number of linked tables.

Furthermore, in the processing of structural parts of a large aircraft in which aluminum material is used, the machining time can be decreased by increasing the rotating speed of the main spindle (spindle) to around 20,000 rpm or more with a high-output spindle motor, it adopts a shortening processing method. In order to perform milling process with this high-speed spindle, it is necessary to have a function to feed a workpiece mounted on a table at a high-speed feed of around 25 meters per minute or faster.

As a countermeasure, not only adding a larger feed motor but also strengthening of the machine base structure is also taken into consideration so as to withstand the large stress generated by sudden acceleration and deceleration of the weight sift of the heavier machine table and the weight of the loaded workpiece and it also leads to an increase in the corresponding cost.

According to the present invention, it is possible to reduce the weight of the table itself and to add a sub-table that can cover up to the maximum limit of the movement amount of the X axis of the machine at the minimum cost, not only high speed feed machining, it is possible to double the machining range by adding a sub table that can handle up to twice the travel distance (in the case of linked two tables), and also to minimize the manufacturing cost, since the feed motor is mounted on each table and the same number of feed motors as the table are driven at the same time in conjunction with the table, the thrust of the feed motor corresponding to the multiple is obtained, and the weight of the work increases even then, the high feed-rate obtained with one table and the appropriate acceleration and deceleration can be obtained. Parallelism and squareness of sub-table to the Z-axis/Ram beam can be reestablished easily by self-cutting with surface milling cutter clamped in main spindle.

By driving the multiple feed motors in the synchronized state, a multiple feed motors are simultaneously operated on the cutting tool attached to one spindle, and thrust for multiple feed motors is obtained, so that the cutting ability is increased. In particular, if the cutting ability for large workpieces increases, savings in machining time are greatly improved. Further, it is possible to upgrade to a spindle motor of high output corresponding to the thrust in the feed direction, which further improves productivity.

The disadvantage of the feed device of the rack and pinion gear is the problem of backlash resulting from the problem of engagement between the gears. As a countermeasure against this, a method of removing the pinion gear by a structure combining bearings and the like as disclosed in Patent Document 3, a method of solving the problem of backlash from the tooth contact surface of different gears of two gears by arranging two in parallel is adopted. Alternatively, there is a method of removing backlash with double structure of pinion gear.

In a state where two or more tables are integrated by a sub table, that is, in a table linkage mode, when two or more pinion gears engaged with the rack, in order to drive the rack in contact with the different tooth flanks of the gears respectively, it is possible to prevent backlash between gears, it is not necessary to add complicated structures.

The machine tool of the present invention has a machine cover function. The machine cover function can easily accommodate machining length doubling function in the table interlock mode by accommodating chips scattering in large quantities at high speed cut out by high speed machining. This system excludes complicated structures, has a simple structure, and further combines the previously used structures and combines it to make it possible to minimize the cost of system production, minimize the cost of machining Since it greatly improves productivity and doubles the machining range of machines, we can realize satisfying the necessary needs of machine users.

Note 2: The present invention contributes to improvement in productivity and increase in processing range. That is, the present invention can realize efficient productivity of large portal type machining center of 3 axis or 5 axis control, automation of processing countermeasure for cutting chips/cutting cooling fluid derived therefrom, while securing safety, you can achieve improved productivity. Of course, the present invention can also be applied to small and medium-sized, but the greatest merit occurs in large machines.

Generally, it is common to use larger-sized and portal-shaped milling machines and machining centers to process larger-sized workpieces, however when the workpiece is large, it takes a considerable time to detach and attach the workpiece or change over the work piece position, it is said the case of large expensive portal type machine tools, the ratio of the actual machining time to actual none machining time is generally 3: 1 to 2: 1, and when used with a large portal machines alone, actual ratio of none-processing/machining time is larger than that of a general machine tools. This is an inefficient state, and it is the current situation when used with a portal type machine alone.

The machine tools with automatic pallet change system automates unloading and loading of pallets by palletizing the table in order to solve the above situation. However, transferring a large pallet loaded with heavy work piece into and out from the machine through extra slide ways that can withstand its weight and movement, clamping and the motive power is required, the cost increases, the installation space of the automatic pallet exchanger is multiplied by several times the pallet size, quite larger size installation space of the machine is required. Furthermore, it is said that the larger sized pallet change time takes approximately 10 minutes to around 15 minutes which is none machining time.

In the present invention, all machine tables able to move independently and also simultaneously by rack and pinion drive system with independent feed motor attached with each machine table which are controlled by NC table controller. Based on this feature, in case of two table set up, after completion of machining with one table A, this table move to it's home position which is work change over position also, at the same time when table A start to move to the home, the other table with new work piece move into the machining start position which is under the spindle. Under this simultaneous movement of both table, no loss time by table position change over. Other word, pallet change time is zero by this invention.

An advantage of the pallet changing apparatus is that productivity can be improved by allowing a workpiece to be attached and detached with another pallet at outside the machine while a workpiece mounted on one pallet is being machined in the machine which improves productivity.

In the present invention, each feeding device (a combination of a rack/pinion gear and a feed motor for driving a pinion gear) is attached for each of two or more tables on a linear way in the X axis direction, in addition, when multiple tables are individually fed and moved, and in the table linkage mode, multiple tables are synchronously fed and moved as the same amount of movement, thereby improving productivity and reducing manufacturing cost as well as savings in terms of machine installation space.

Since the work can be attached and detached when each table is transferred to each origin/home in the X axis direction, there is merit in that there is no need for a pallet moving operation like the pallet changing device in the present invention, and in terms of cost, since the movement is completed only by moving to the origin/home of the table, the manufacturing cost is also minimized.

In the present invention, Structurally, by a simple configuration of only a combination of a rack added to the machine base and a pinion gear attached to a feed motor attached to each table, it is possible to avoid form a pallet chain which is complicated and expensive to carry pallets in and out from the machine, there is also a merit not only the reduction of manufacturing cost but also there is no special check items of the maintenance of automatic pallet changer. These two tables can be used for the first process and the second process, or the same workpiece can be processed with both tables. When three tables are placed on the X axis, the first, second, and third steps are directed to the work that needs it.

In the table linkage mode, multiple tables support larger/longer workpieces on the table by fixing the intervals of the tables and synchronizing them by control by the control device. The length of the supportable work is the length of the table plus the length of the bracket on the opposite side of the table, and the large work can be stably loaded on the sub table common to the multiple tables. The size of the workpiece can be expanded as necessary by selecting the number of tables to be linked and the length of the sub table, and further, the processing continuously corresponds to a plurality of processes on the work on the sub table.

Supplementary Note 3: In the present invention, the specifications of the feed motor can be freely selected according to the processing contents of the workpiece, thereby improving the productivity. In a general machining centers, a feed motor corresponding to the characteristics of the machine is selected and attached to a machining center. Processing of hard and sticky difficult-to-cut materials such as titanium and stainless steel, in rough-cutting processing, processing with a large-diameter cutting tool in order to reduce processing time. In machining with larger diameter milling cutter and drill require strong horsepower and torque.

For this purpose, a motor capable of obtaining a high output (horsepower) and a strong torque is required for driving the machine's spindle. However, in finishing process especially for curved surface, it is necessary to increase the rotation speed of the spindle by using a small diameter cutting tool in order to increase the degree of finish of the machined surface. At the same time, for high-speed cutting with high-speed spindles, it is necessary to increase the table feed speed. A double winding type motor has been developed as a spindle motor capable of obtaining this low speed and high torque processing and highspeed processing.

Furthermore, for high speed machining, a milling head with a high-speed spindle motor attached and with a high output and high torque motor are separately prepared and can be automatically exchanged to the ram axis (Z axis), a device (automatic head exchanging device) has also been developed, and it is possible to respond by mounting the optimum motor by the material of the workpiece.

However, in high-speed machining, concurrent with the increase in speed of the spindle motor, by increasing the feed speed of the feed motor, it is expected to double the machining capability, and furthermore, in order to fly the cutting chips away from each tooth of the milling cutter quickly, a high feed speed is required. Therefore, not only the number of revolutions of the feed motor is increased, but also the method of fulfilling the purpose by couse pitch ball screw connected to the feed motor has become popular.

However, when adopting the above method, there is a demerit that the propulsion force (torque) of the feed motor decreases. Therefore, in order to machine hard-to-cut materials like titanium, even if a high-torque type main spindle motor is installed, if the torque of the feed motor cannot correspond to the spindle motor feature, there is a problem that the characteristics of the head cannot be reflected, and even if the head or the spindle is exchanged by the automatic head exchanging device or the automatic spindle changing device, if the feed motor suitable for the characteristics of the head cannot be selected, there is a problem that cannot be utilized sufficiently.

The feed motor also has a problem of installation space of the feed motor, and in double winding, since the size of the motor increases, in general, in the feed motor, it is set for high speed type or low speed type. Further, for high-speed feeding, although a method of increasing the pitch of the ball screw to increase the speed is generally used, there is a disadvantage the tendency that the torque drops greatly, it is impossible to flexibly deal with the processing different type of material of the work, in order to responding by improving the efficiency of each process by using two different types of machine: a machine that produces a torque and a finishing machine that can perform high-speed machining.

There are also technologies that use a linear motor, but it can not deal with the above two kinds of requirements, and in particular, the linear motor has a limit of not being able to obtain the same high torque as compared with the ball screw, and the ball screw , the longer the screw length is, the screw will twist and sway more, and in the type in which the screw rotates, it is not possible to select a plurality of feed motors. (This problem is not a rack and pinion gear feeder.). When longer ball screw drives multiple machine table with high speed, thermal growth of ball screw between Nuts cannot be controlled at all. Moreover, in the pallet change type, since the pallets are loaded and held on the machine table, workpieces attached to the pallet are processed by feed rate and thrust are all constrained by the characteristics of the table feed mechanism and its feed motor.

In contrast, according to the present invention, it is possible to construct a system in which multiple tables are set on the X axis and the number of tables is determined in accordance with the processing step. For example, as shown in FIG. 13, according to the structure of four tables, rough cutting of the upper surface of the workpiece is carried out on the table of A, rough cutting of the lower surface of the workpiece is carried out on the table B, finish of the workpiece is finished on the table C, it is possible to assume a process in which a form of process, such as machining and finishing of work lower surface, is considered for table D. In this case, in tables A and B requiring rough machining, it is desired to shorten the machining time by increasing the machining capability with a large-diameter cutting tool for rough cutting.

For this purpose, the low speed high torque range of the spindle motor is selected, and the feed motors of the tables A and B can be selected and mounted with a type that produces high output and high torque. Also, it is possible to adopt a type which can automatically mount a milling head incorporating a spindle motor adapted to workpiece material and a spindle head configuration (bearing etc.) to the ram beam with a machining head changer.

The tables C and D are for finish machining and the spindle motor is operated in high speed range in order to improve the finish degree of the machined surface and the feed motors of tables C and D are rotated at high speed and it is possible to use a feed motor having an optimum characteristic according to its processing purpose that it is possible to select and install a type in which high acceleration/deceleration can be obtained, and according to the work and its processing content, selection of the feed motor can also be freely selected, thereby providing a flexible system.

In the case of rough cutting, as much as possible, this merit can be maximized by NC programming incorporate with the work condition and work set up posture and the machining process based on the movement of the X axis. Even in the table linkage mode which is a feature of the present invention, a great merit can be obtained by selection of this feed motor.

In the table-linkage mode, the 4 sets of table of A, B, C, and D and the each feed motor assembly, the tables of A and B with sub table are linked by software and the tables of C and D with sub table are linked by software, when assembling a table structure that can work with twice the length by linkage with 2 tables, when one table is set for rough cutting and the other table is set for finish processing, a table of A and B, the work can be fed to a larger diameter cutting tool by two pairs of high output and high torque feed motors, output and torque close to two times are obtained, and furthermore, they are mounted separately at two places, the gear backlash can also be automatically avoided by the feed of the pinion gear attached to the feed motor, so a great merit is obtained.

When tables C and D with sub table are linked by software, feed motors are installed in both tables for high-speed finishing, which enables high-speed feed and high acceleration and deceleration, and by two high speed feed motors, even if the table length is doubled, there is the merit that it is possible to obtain the same high speed feed rate and high speed acceleration and deceleration speed as single table.

In Fig. 14, the 4 sets of tables of A, B, C, and D, tables position change over time at independent mode or linkage mode are slashed to zero by simultaneous movement control. Under the independent mode operation, first operation will start from table A which moves to under the spindle to start machining, at this stage, all other 3 table B, C and D are at right side which is their 1^{st} home position and while machining the work on the table A, work change over operation to be done at B, C and D table. As soon as machining process is completed for table A, table A moves to its 1^{st} home position which is left end of X-axis direction, at the same time table B moves to left toward to machining position simultaneously which is under the spindle, then start to machining. After completion of machining process to the work piece at the table B, table B moves to left side and stop at it's 2^{nd} home position which is right side of table A, at the same time table C moves to left toward to machining position simultaneously which is under the spindle and start to machining. After completion of machining process to the work piece at the table C, table C move to its 2^{nd} home position which is right side of table B, at the same time table D moves to left toward to machining position simultaneously which is under the spindle and start to machining. After completion of machining process to the work piece at the table D, table D moves to its 1^{st} home position which is right side end of X-axis, at the same time table A, B and C moves to right direction and table B and C are stopped at their 1^{st} home position and table A stop at machining position simultaneously which is under the spindle and start to machining. Then this cycle will be continued repeatedly as full automated cycle with 4-sets of tables with 4 different machining processes or any combination per machining process requirements and there is no loss time by table position change over cycle. This eliminates total work piece change over time to Zero if the work change over time is same or less than machining time. In case to machine all same work piece and same machining process, operator replace finished work piece to new blank work piece after completion of machining and moved out to its home position. In case, the work piece requires 4 different operation to complete the requirement, to automate the total cycle continuously, it require to establish stock of 1-set of semi-finished work pieces per specific stage to supply semi-finished work piece continuously to the table. Especially larger portal type machines, after the completion of machining, machine table moves back to their home for work change over and this invention is utilizing simultaneous multi table moving cycle which enable to return the table to the home position and move the other tables to the machining position at the same time. There are big total cycle time saving by this invention compared with automatic pallet changer with multiple pallets which require a pallet change over time multiply number of pallets, operated by mechanical complicated construction.

In the case of two tables, since two sets of high-speed feed motors are separately mounted at two places in front of and behind the sub-table, the acceleration and deceleration are also greatly positive. This is a concept like the fact that the starting acceleration is fast according to the driving of both wheels of a car.

As a variety of processing countermeasures, feed devices (feed motor and pinion gear) are attached to the left end or the right end of each table to further improve the flexibility, but the feed device (feed motor and pinion gear), it can also be attached to both the left and right ends of each table. In this case, a feed motor for high-speed feed is attached to one side and a feed motor for high torque is attached to the other, the number of axes of the control device (control system of the motor to be controlled) is increased, and by storing the position and characteristics of the feeder, it becomes possible to selectively use the feed speed and feed force of the table. even in this case, a space for attaching the feed motor is prepared by the brackets attached to each table end.

Supplementary Note 4: The present invention can appropriately cope with high-speed machining. In recent years, high-speed heavy-duty cutting has become widespread due to the development of new cutting tools and improvement of the feed mechanism of machines, and from the increase of the cutting ability of the cutting tool, a large amount of cutting chips scatter at high speed , it is necessary to flow a large amount of high-pressure cutting fluid to the processed portion in order to prevent the heat generated by the cutting friction occurring in the high-speed machining, so that providing machine cover for the protection to them and keeping safe operation under the high-speed machining with system atomization at low cost.

Therefore, in the present invention, for example, when moving the two tables and stopping either one of them at the origin of the left and right ends, in the work of attaching and detaching the work, the function of the movable special type machine cover, the same machine cover prevents the scattering of cutting chips and the spraying of cutting water in the work in the table independent mode or in the table interlock mode. Therefore, the operator can safely perform the necessary work and also can keep the environment beautification of the machine factory.

In the systemization of the present invention as described above, in a machine tool, in particular, a large portal type machining center with a multiple tables, a milling machine, and the like, it is possible to reduce the dead time by alternately switching between the work processing/machining position and the work change over position in the table independent mode, which enable to supply blank-workpieces, semi-finished work pieces, workpiece change over , and machining synchronously, in table linkage mode can cope with longer work (length wise) piece than single table length, furthermore adopt safety machine cover with automated shutter doors, it is possible to improve the productivity and secure the safety operation, and automation of high-speed machining system can be done under space saving at low manufacturing cost by simple structure.

### Industrial Applicability

Although the present invention is advantageously applied mainly to a portal type machining center, applicable to a complex, general purpose or special purpose type machine tools.

### EXPLANATION OF NUMERALS

1 Flexible 2 or more (multi) table system
2 Machine tool
3 Machine base
4 Linear slide way (Linear way)
5 Machine table (Table)
6 Machining Head
7 Work piece (Work)
8 Column
9 Cross beam
10 Saddle
11 Ram beam (Ram)
12 Main spindle (Spindle)
13 Rack gear rail (Rack)
14 Pinion gear
15 Feed motor
16 Sub-table
17 Bracket
18 Linear way cover
19 Machine cover
20 Control unit
21 Table control unit
22 Machining head control unit
23 Door with window
24 Sliding door
25 Shutter
26 Fix plate
27 Fastening screw
28 Location pin
29 Location hole
30 Screw
31 Threaded hole
32 Sliding guide
33 Feed motor shaft
34 Unilateral door

## Claims

1. A flexible multi-table system comprising:
two or more machine tables movably supported between a workpiece machining position and a workpiece change over position on longitudinal linear ways of a machine base, one or more machine heads movable in multiple axial directions of the machine base, a rack and pinion driving system for moving the two or more machine tables, the rack and pinion driving system comprising rack gear ways installed in a longitudinal direction of the machine base, pinion gears engaged with the rack gear ways, feed servo motors for driving the pinion gears and a control unit for controlling the movement of the machine tables, wherein unprocessed workpieces are attached to the machine tables at a workpiece change over position, unprocessed workpieces machined by the one or more machine heads at the workpiece machining position and, machined workpieces are removed at a workpiece change over position, in a table linked mode a large unprocessed workpiece is attached to two or more machines at a workpiece change over position, the large unprocessed workpiece machined by the one or more machine heads at the workpiece machining position and large machined workpieces removed from the two or more machine tables at a workpiece change over position, the control unit being configured to move each of the machine tables independently in a table independent mode and, in the table linked mode, move the two or more machine tables in the same direction, at the same speed and in the same movement amount in a synchronized state.

2. A flexible multi-table system according to claim 1, wherein the two or more machine tables are detachably attached to the linear ways.

3. A flexible multi-table system according to claim 1 or 2, wherein in the table linkage mode, a sub-table is common to the two or more machine tables and the two or more machine tables and the sub table are constrained by either friction, a fitting or a fastening.

4. A flexible multi-table system according to claim 3, wherein brackets are attached to sides in the movement direction of each machine table, the sub-table is supported by the brackets, and a space is formed near an opposite side.

5. A flexible multi-table system according to any one of the preceding claims, wherein a rack is attached to the machine base and has teeth in an upward or horizontal direction so that the pinion gear can engage with the rack from the vertical direction or the horizontal direction.

6. A flexible multi-table system according to any one of the preceding claims, wherein an automatic head changing device is attached to a ram so that a spindle head or a spindle suitable for cutting processing of a workpiece can be selected.

7. A flexible multi-table system according to any one of the preceding claims, wherein when the machining requirements of two or more machining heads are different and the feeding movement of two or more machine tables is from one side to the other side of the machine base, different processing is sequentially executed successively for each machining head.

8. A flexible multi-table system according to any one of the preceding claims, wherein a linear way cover is provided on an upper surface of the linear ways of the machine base to prevent ingress of chips and cooling/cutting fluid into the linear ways.

9. A flexible multi-table system according to any one of the preceding claims, wherein the machine tool is surrounded by a machine cover with shutter doors which keep flying cutting chips and coolant fluid inside of the machine cover.
